# FASCICULE DE BREVET EUROPEEN

(11) **EP 2 045 901 B1**
(45) Date de publication et mention de la délivrance du brevet: **26.08.2015**
(21) Numéro de dépôt: 08162972.7
(22) Date de dépôt: 26.08.2008
(51) Int. Cl.: H02M 1/12

(54) **Dispositif de compensation actif de courants d'harmonique**
Vorrichtung zur aktiven Kompensierung von Oberschwingungsströmen
Active compensation device for harmonic currents

(30) Priorité: 30.08.2007 FR 0757272
(43) Date de publication de la demande: 08.04.2009
(73) Titulaire: ALSTOM Transport Technologies, 92300 Levallois-Perret (FR)
(72) Inventeur: Bekmans, Marc, 6120 Nalinnes (BE)
(74) Mandataire: Blot, Philippe Robert Emile

(56) Documents cités:
- JOU H-L ET AL: "Parallel operation of passive power filter and hybrid power filter for harmonic suppression" IEE PROCEEDINGS: GENERATION, TRANSMISSION AND DISTRIBUTION, INSTITUTION OF ELECTRICAL ENGINEERS, GB, vol. 148, no. 1, 16 janvier 2001 (2001-01-16), pages 8-14, XP006016060 ISSN: 1350-2360
- JOU ET AL: "A hybrid compensation system comprising hybrid power filter and AC power capacitor" INTERNATIONAL JOURNAL OF ELECTRICAL POWER & ENERGY SYSTEMS, JORDAN HILL, OXFORD, GB, vol. 28, no. 7, 1 septembre 2006 (2006-09-01), pages 448-458, XP005544422 ISSN: 0142-0615
- JOU H-L ET AL: "New active power filter and control method" IEE PROCEEDINGS: ELECTRIC POWER APPLICATIONS, INSTITUTION OF ELECTRICAL ENGINEERS, GB, vol. 152, no. 2, 4 mars 2005 (2005-03-04), pages 175-181, XP006023719 ISSN: 1350-2352

## Description

La présente invention concerne un dispositif de compensation actif de courants d'harmonique d'un courant principal pour un branchement en parallèle sur un circuit d'entrée d'un convertisseur, du type comportant :
- un capteur de courant d'alimentation ;
- un générateur de courant propre à injecter un courant en entrée du convertisseur en fonction de l'intensité du courant d'harmonique mesuré par le capteur de courant.

Dans le domaine ferroviaire, et notamment dans les véhicules de traction électrique alimentés depuis une caténaire, le retour de courant s'effectue au travers des voies. Il est nécessaire que l'intensité des courants d'entrées, hors courant principal d'alimentation des moteurs soit limitée. En particulier, dans la mesure où certains signaux de signalisation sont transmis au travers des rails, couramment à une fréquence de 50 Hz lorsque le véhicule est alimenté en courant continu, il est nécessaire que le véhicule de traction présente une forte impédance d'entrée au moins pour cette fréquence de 50 Hz.

Des contraintes identiques existent lorsque le courant d'alimentation du véhicule de traction est alternatif avec une fréquence par exemple de 50 Hz et que des signaux de signalisation sont transmis sur les rails à des fréquences différentes du 50 Hz telles que 75 Hz.

Il est connu de placer dans le véhicule de traction de grosses bobines permettant d'augmenter l'impédance d'entrée pour une fréquence d'au moins 50 Hz dans le cas d'une alimentation en courant continu. Ces bobines sont très encombrantes et l'énergie stockée y est importante bien que cette énergie ne soit pas utilisée. De plus, la bobine dissipe beaucoup d'énergie, couramment de l'ordre de plusieurs kW.

Pour éviter de telles bobines, il est connu de recourir à des dispositifs de compensation actifs.

Une première solution consiste à ajouter en série à l'entrée du convertisseur une tension négative égale à la tension d'entrée. De même, il est connu de placer, en parallèle avec le convertisseur, un générateur de courant propre à engendrer un courant de signe opposé au courant entrant dans le convertisseur pour les fréquences différentes de celle du courant d'alimentation.

Ces solutions présentent l'inconvénient de nécessiter une logique de commande extrêmement sophistiquée commandant des éléments de commutation fonctionnant à haute fréquence et engendrant des parasites.

Le document de Jou et al. intitulé "Parallel opération of passive power filter and hybrid power filter for harmonic suppression", IEEE proceedings, vol. 148(1), pages 8-14, décrit un dispositif de compensation actif des courants d'harmonique d'un courant principal branché en parallèle sur une charge non linéaire.

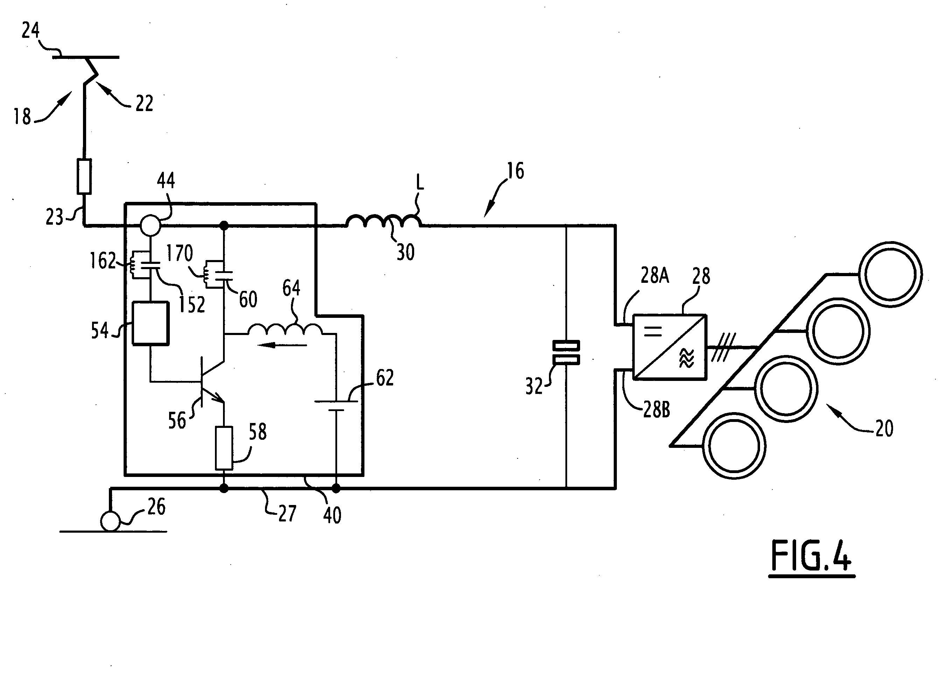

Le document de Rahmani et al. intitulé "Implementation and simulation of modified PWM with two current control techniques applied to single-phase shunt hybrid power filter", IEE proceedings vol. 153, No.3, Mali 2006, divulgue un filtre active ( active power filter, Figure 4 ) branché en parallèle sur un circuit d'entrée d'un convertisseur ( non linear load ). Un capteur de courant détecte le courant ( Is ) fourni par une source d'alimentation. Le filtre actif injecte un courant de compensation ( Ic ) en entrée du convertisseur ( non linear load ) en fonction du courant capté.

Ainsi, l'invention a pour but de proposer un dispositif de compensation actif des courants d'harmonique d'un courant principal qui soit simple à mettre en oeuvre et limitant la production de parasites.

A cet effet, l'invention a pour objet un dispositif de compensation actif du type précité, caractérisé en ce que le générateur de courant est propre à engendrer et à injecter à l'entrée du convertisseur, en plus du courant d'harmonique, un courant k fois supérieur au courant d'harmonique mesuré par le capteur de courant, où k est positif.

Suivant des modes particuliers de réalisation, le dispositif de compensation comporte l'une ou plusieurs des caractéristiques suivantes :
- le générateur de courant est propre à engendrer et injecter à l'entrée du convertisseur un courant proportionnel à l'intensité du courant d'harmonique mesuré par le capteur de courant ;
- le capteur de courant est propre à ne mesurer que les composantes alternatives du courant à l'exception de la composante principale de courant continu ou alternatif selon l'application continue ;
- le capteur de courant est propre à exclure de la mesure le courant de fréquence égale à une fréquence prédéterminée correspondant à la fréquence d'alimentation ;
- le capteur de courant comporte un circuit bouchon ;
- le générateur de courant comporte un amplificateur de classe A ;
- l'amplificateur comporte un transistor, une source de polarisation en continu, et une bobine de découplage reliant le transistor au générateur de tension de polarisation ;
- le générateur de courant comporte un pré-amplificateur reliant le capteur de courant au transistor et assurant une amplification d'un gain k fois supérieur à la valeur d'une résistance reliant le transistor à la masse ; et
- le générateur de courant comporte un amplificateur de classe B.

L'invention a également pour objet une chaîne de traction pour véhicule de traction ferroviaire comportant au moins un moteur électrique, un convertisseur d'alimentation alimenté depuis des moyens de captage de courant et, monté en parallèle entre les moyens de captage de courant et le convertisseur, un dispositif de compensation actif des courants d'harmonique tel que décrit ci-dessus.

L'invention sera mieux comprise à la lecture de la description qui va suivre, donnée uniquement à titre d'exemple et faite en se référant aux dessins, sur lesquels :
- la figure 1 est un schéma du circuit de puissance d'une motrice selon l'invention ;
- la figure 2 est un schéma du principe de fonctionnement du circuit de la figure 1 ;
- la figure 3 est une vue identique à celle de la figure 1 d'une variante de réalisation ; et
- la figure 4 est une vue identique à celle de la figure 1 d'un mode de réalisation fonctionnant en courant alternatif.

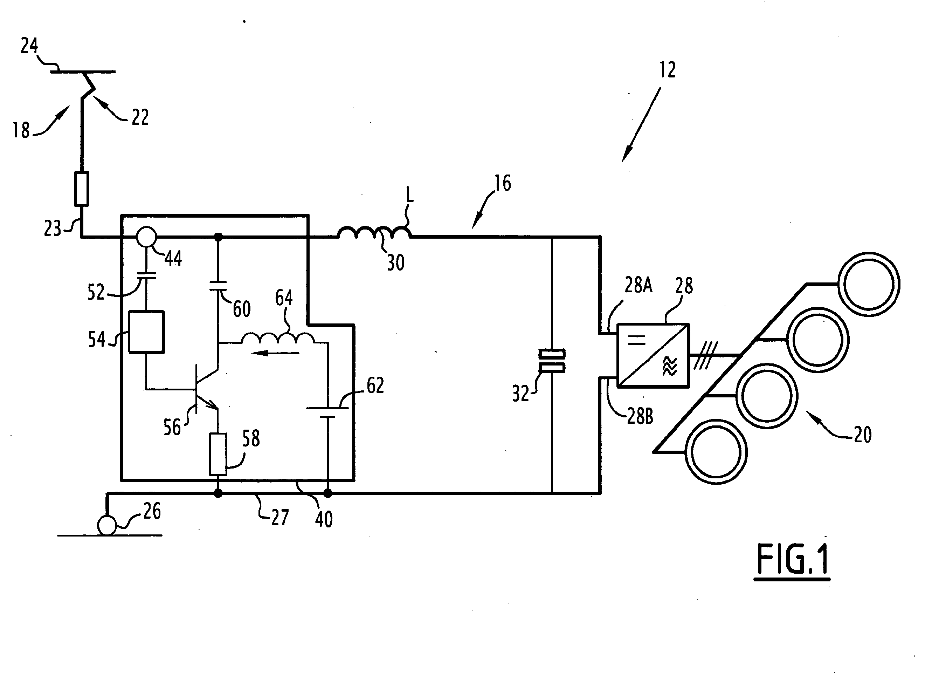

Sur la figure 1 est représentée une chaîne de traction 12 d'un véhicule de traction ferroviaire, telle qu'une locomotive ou une voiture motrice d'une rame.

La chaîne de traction 12 comporte un circuit de puissance 16 alimenté depuis des moyens de captage de courant 18 et un ensemble de moteurs 20 assurant la propulsion du véhicule, ces moteurs étant alimentés par le circuit de puissance 16.

Plus précisément, les moyens de captage du courant 18 comportent un pantographe 22 alimentant une ligne de fourniture de puissance 23 et propre à prélever un courant continu dans une caténaire 24 placée au-dessus de la voie. La tension du courant continu dans la caténaire est par exemple de 1,5 kV ou 3 kV. Une roue conductrice 26, en contact avec la voie ferrée, assure le retour du courant et la fermeture du circuit. Elle est reliée à la masse 27 du circuit.

Les moteurs 20 sont par exemple des moteurs à courant alternatif triphasé alimentés depuis un convertisseur 28. Ce convertisseur est propre à recevoir un courant continu sur ses bornes d'entrée 28A, 28B et à assurer une conversion du courant continu d'alimentation issu de la caténaire en un courant alternatif triphasé propre à l'alimentation.

Le convertisseur est équipé par exemple, d'un système de régulation de type PWM, c'est-à-dire à modulation de largeur d'impulsion.

Comme connu en soi, le convertisseur 28 est précédé d'un filtre LC recevant le courant issu de la caténaire 24 au travers de la ligne de fourniture de puissance 23. Le filtre LC comporte une bobine 30 montée en série entre le pantographe d'entrée 22 et une première entrée 28A de l'onduleur. Un condensateur 32 du filtre LC est monté en parallèle entre les bornes d'entrée 28A, 28B du convertisseur 28.

Un dispositif 40 de compensation actif des courants d'harmonique du courant d'alimentation est placé dans le circuit de puissance 16 entre le filtre LC 30, 32 et les moyens 18 de captage de puissance.

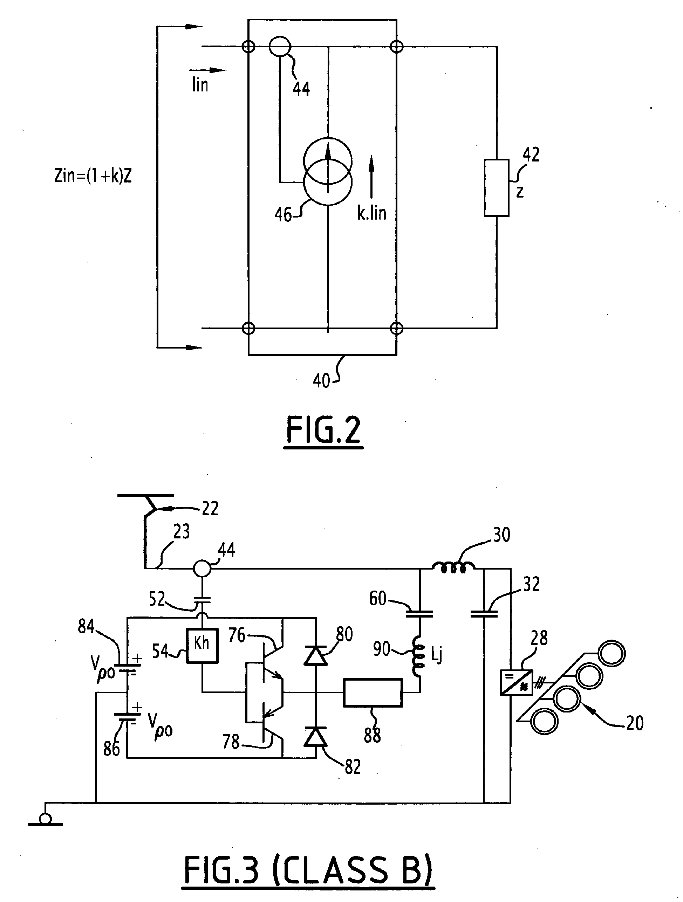

Le schéma de principe simplifié du dispositif 40 est illustré sur la figure 2. Sur cette figure, le filtre LC, le convertisseur 28 et les moteurs 20 sont schématisés par une charge 42 d'impédance Z.

Le dispositif 40 comporte sur ce schéma un capteur 44 de courant alternatif, c'est-à-dire un capteur de mesure de l'intensité des courants harmoniques dans la ligne 23 autres que le courant continu servant à l'alimentation. Il comporte en outre un générateur de courant 46 relié en parallèle à la charge 42.

Le générateur de courant 46 est piloté par le capteur 44 pour engendrer et injecter en entrée de la charge 42 un courant dont l'intensité est fonction de l'intensité mesurée par le capteur 44 et ayant une intensité au moins deux fois supérieure à l'intensité mesurée par le capteur 44. De préférence, le courant injecté est proportionnel avec un facteur k au courant d'alimentation filtré de sa composante continue, k étant positif. k est de préférence compris entre 10 et 50.

Ainsi, pour un courant d'entrée dépourvu de composante continue noté Iᵢₙ, le générateur de courant 46 est propre à engendrer un courant d'intensité kIᵢₙ. En conséquence, l'impédance équivalente Zᵢₙ de la chaîne de traction, vue depuis la caténaire, est égale à Zᵢₙ = (1 + k) Z.

De préférence, la source de courant 46 comprend un amplificateur linéaire et notamment un amplificateur de classe A.

Comme illustré sur la figure 1, le capteur de courant 44 est prévu sur la ligne de fourniture de puissance 23 entre le pantographe d'entrée 22 et la bobine 30 du filtre LC. Un condensateur 52 est relié au capteur de courant 44 et est monté en série avec un préamplificateur 54 propre à produire une tension représentative du courant alternatif mesuré par le capteur 44. Le condensateur 52 assure une suppression de la composante continue du courant mesuré.

Le générateur de courant 46 comporte un transistor 56 dont la base est reliée au pré-amplificateur 54. L'émetteur du transistor 56 est relié par une résistance 58 à la masse 27 assurant le retour du courant au travers de la roue 26. Le collecteur du transistor 56 est relié à la ligne 23 de fourniture de puissance au travers d'un condensateur de filtrage 60.

Le générateur de courant 46 comporte par ailleurs un générateur de tension continue 62 dont une borne est reliée au collecteur du transistor 56 pour assurer sa polarisation. Une inductance 64 de découplage est interposée entre la source de tension 62 et le collecteur du transistor 56. En variante, cette inductance est remplacée par une source active de courant si le découplage est critique.

Le préamplificateur 54 a une fonction de transfert donnée permettant de pré-amplifier le courant mesuré par le capteur 44 et est adapté en particulier pour convertir un courant d'entrée Iᵢₙ en une tension égale à kRIᵢₙ dans une bande de fréquences où k dépend de la fréquence.

La bande de fréquence s'étend d'une fréquence minimale fₘᵢₙ à une fréquence maximale fₘₐₓ.

fₘᵢₙ est choisie supérieure à un seuil 1. Le seuil 1 est de l'ordre de quelques hertz et est choisi de manière à ce que des variations naturelles du courant d'entrée dues aux variations de charge ne soient pas amplifiées. Par exemple fmin = 10 Hz.

fmax est choisie inférieure à un seuil 2. Le seuil 2 est de l'ordre de quelques centaines de kHz. Etant donné que le système est un système bouclé, on ne doit pas multiplier le courant au-delà d'une certaine fréquence car il y a des risques de déstabilisation du système (oscillations).

De préférence, en fonction de la fréquence, k est compris entre 10 et 50.

Dans un mode de réalisation, le condensateur 52 est compris dans le capteur de courant 44 ou dans le préamplificateur 54. Le capteur de courant est par exemple un transformateur d'intensité.

Le courant d'entrée Iᵢₙ est mesuré et converti sous forme d'une tension par le préamplificateur de transconductance kR 54. Cette tension est appliquée sur la base du transistor 56. Le courant dans la résistance 58 a alors une intensité égale à kRlᵢₙ/R, c'est-à-dire klᵢₙ. Ce courant alternatif d'intensité klᵢₙ, présent au niveau du collecteur, est injecté dans la ligne de fourniture de puissance 23 en aval de la connexion 44 de mesure de courant.

Pour le bon fonctionnement, l'inductance 64 assure un découplage du courant alternatif par rapport à la source de polarisation 62 du transistor.

La position de la mesure du courant 44, avant le point de réinjection du courant produit par le générateur de courant 46 garantit que le courant généré par le dispositif de compensation 40 est totalement absorbé par la charge 42 indépendamment de l'impédance de la source d'alimentation formée ici de la caténaire. Ainsi, ce circuit est très robuste.

On comprend qu'un tel circuit augmente l'impédance d'entrée de la chaîne de traction et évite ainsi la production de courants d'harmonique compte tenu de l'impédance très élevée présentée par la chaîne de traction.

Ainsi, le circuit diminue l'impédance de source d'un facteur (1 + k). Cet assemblage augmente donc l'impédance de source de l'impédance de charge d'un facteur (1 + k)², ce qui est très favorable d'un point de vue de la stabilité de la ligne. L'impédance de la source est l'impédance vue par le filtre d'entrée du point de vue de son entrée, c'est-à-dire l'impédance de la caténaire. L'impédance de charge est l'impédance du filtre d'entrée vue par la caténaire, c'est en réalité l'impédance du train.

Un tel circuit permet donc une augmentation de la valeur de l'impédance d'entrée avec un nombre de composants actifs très limité. Du point de vue de la charge, l'impédance de la source est très diminuée, ce qui la rend plus robuste aux variations. L'électronique de contrôle est simple, robuste et sobre en fonctionnement, ce qui garantit une très bonne fiabilité.

Un tel dispositif de compensation peut être placé en parallèle sans ouvrir le circuit d'alimentation principal. Par ailleurs, un tel dispositif ne produit pas de parasite de commutation à haute fréquence. Son fonctionnement s'avère efficace sur une très large bande de fréquence, qui n'est limitée que par la largeur de bande du capteur de courant.

Sur la figure 3 est représentée une variante de réalisation du dispositif de la figure 1, dans laquelle l'amplificateur de courant de classe A dans la figure 1 est remplacé par un amplificateur de classe B. Dans ce mode de réalisation, les éléments identiques ou correspondant à ceux de la figure 1 sont désignés par les mêmes numéros de référence.

Dans ce mode de réalisation, la source de courant 46 comporte deux transistors 76, 78 montés en série et dont les bases sont toutes deux connectées au préamplificateur 54.

Une diode 80, 82 est montée entre l'émetteur et le collecteur de chaque transistor. De même, deux sources de tension de polarisation 84, 86 sont reliées d'une part à la masse 27 et d'autre part à l'émetteur et au collecteur respectivement des transistors 76 et 78. Le point milieu, par lequel les deux transistors 76 et 78 sont reliés, est relié à une borne d'une résistance 88 analogue à la résistance 58. Cette résistance est montée en série avec une bobine 90 et un condensateur 92 et est reliée par leur intermédiaire à la ligne de fourniture de puissance 63 entre le capteur 44 et le filtre LC 30, 32.

L'usage d'un amplificateur de classe B permet de diminuer la dissipation de puissance, puisque l'amplificateur de classe B ne dissipe pas de puissance au repos. Par ailleurs, la protection des transistors est rendue possible grâce à l'usage des diodes 80, 82 montées en parallèle.

Sur la figure 4, est représentée encore une variante de réalisation du circuit de la figure 1 dans le cas d'une alimentation par un courant alternatif. Dans ce mode de réalisation, on suppose que la caténaire fournit un courant alternatif à une fréquence de 50 Hz, étant supposé également que des signaux de signalisation sont transmis à des fréquences de 75 Hz.

Dans ce mode de réalisation, les condensateurs de couplage 52 et 60 des modes de réalisation des figures 1 et 3, qui sont propres à supprimer la composante continue du courant d'alimentation sont remplacés par des circuits bouchons formés, comme connu en soi, d'un condensateur respectivement 152 et 160 et d'une bobine montée en parallèle, respectivement 162 et 170. Chaque circuit bouchon est accordé sur une fréquence de 50 Hz, de manière à filtrer la fréquence de 50 Hz tout en laissant passer les autres fréquences.

On conçoit que, comme précédemment, le dispositif actif de compensation d'harmoniques assure en dehors de la fréquence d'alimentation de 50 Hz, une diminution des harmoniques produites en augmentant l'impédance d'entrée de la chaîne de traction.

La solution proposée ici nécessite un capteur de courant sensible mais pas aussi précis que les solutions dans lesquelles un courant harmonique égale au courant harmonique mesuré est réinjecté. Ceci provient du fait qu'on réinjecte un courant k fois supérieur au courant harmonique mesuré.

De manière générale, selon l'invention, le dispositif présente la particularité d'être placé en amont des impédances de filtrage pour en augmenter la valeur.

Le positionnement du dispositif du côté de la source et non du côté de la charge impose qu'il possède une haute impédance d'entrée et donc un comportement de source de courant et non de tension.

Le dispositif se différentie également par le caractère linéaire de la commande de son transistor par opposition à une commande en tout ou rien. Le transistor est en permanence polarisé et contrôle de façon dissipative le courant qui le traverse.

## Revendications

1. Dispositif (40) de compensation actif des courants d'harmonique d'un courant principal pour un branchement en parallèle sur un circuit d'entrée d'un convertisseur (28), comportant :
- un capteur (44) de courant d'alimentation ;
- un générateur (46) de courant propre à injecter un courant en entrée du convertisseur (28) en fonction de l'intensité du courant d'harmonique mesuré par le capteur de courant (44) sur une ligne de fourniture de puissance,
le générateur de courant (46) étant propre à engendrer et à injecter à l'entrée du convertisseur (28), en plus du courant d'harmonique, un courant k fois supérieur au courant d'harmonique mesuré par le capteur de courant (44), où k est positif, **caractérisé en ce que** le générateur de courant (46) comporte un amplificateur linéaire de classe A comportant un transistor (56), une source de polarisation (62) en continu dudit transistor, et un pré-amplificateur (54) reliant le capteur de courant (44) au transistor (56), le préamplificateur ayant une fonction de transfert permettant de convertir le courant Iᵢₙ mesuré par le capteur de courant, en une tension égale à kRIᵢₙ, appliquée sur la base du transistor, où R est la valeur d'une résistance (58) reliant le transistor (56) à la masse (27), ledit transistor étant ainsi commandé linéairement par le pré-amplificateur.

2. Dispositif (40) de compensation actif des courants d'harmonique d'un courant principal pour un branchement en parallèle sur un circuit d'entrée d'un convertisseur (28), comportant :
- un capteur (44) de courant d'alimentation ;
- un générateur (46) de courant propre à injecter un courant en entrée du convertisseur (28) en fonction de l'intensité du courant d'harmonique mesuré par le capteur de courant (44) sur une ligne de fourniture de puissance,
le générateur de courant (46) étant propre à engendrer et à injecter à l'entrée du convertisseur (28), en plus du courant d'harmonique, un courant k fois supérieur au courant d'harmonique mesuré par le capteur de courant (44), où k est positif, **caractérisé en ce que** le générateur de courant (46) comporte un amplificateur linéaire de classe B, comportant deux transistors (76, 78), deux sources de polarisation (84, 86) en continu desdits deux transistors, et un pré-amplificateur (54) reliant le capteur de courant (44) auxdits transistors (76, 78), le préamplificateur ayant une fonction de transfert permettant de convertir le courant Iᵢₙ mesuré par le capteur de courant, en une tension égale à kRIᵢₙ, appliquée sur des bases de chaque transistor, où R est la valeur d'une résistance (88) reliant le point milieu par lequel les deux transistors sont reliés et la ligne de fourniture de puissance à laquelle ladite résistance est connectée par l'intermédiaire d'une bobine (90) et d'un condensateur (92) en série, lesdits deux transistors étant ainsi commandés linérairement par le pré-amplificateur.

3. Dispositif de compensation selon la revendication 1 ou la revendication 2, **caractérisé en ce que** le générateur de courant (46) est propre à engendrer et injecter à l'entrée du convertisseur (28) un courant proportionnel à l'intensité du courant d'harmonique mesuré par le capteur de courant (44).

4. Dispositif de compensation selon l'une quelconque des revendications précédentes, **caractérisé en ce que** le capteur de courant (44) est propre à ne mesurer que les composantes alternatives du courant à l'exception de la composante principale de courant continu ou alternatif selon l'application continue.

5. Dispositif de compensation selon l'une quelconque des revendications 1 à 3, **caractérisé en ce que** le capteur de courant (44) est propre à exclure de la mesure le courant de fréquence égale à une fréquence prédéterminée correspondant à la fréquence d'alimentation.

6. Dispositif de compensation selon la revendication 5, **caractérisé en ce que** le capteur de courant (44) comporte un circuit bouchon (152, 162).

7. Dispositif de compensation selon la revendication 1, **caractérisé en ce que** l'amplificateur est de classe A et comporte, en outre, une bobine de découplage (64) reliant le transistor (56) au générateur de tension de polarisation (62).

8. Chaîne de traction d'un véhicule de traction ferroviaire comportant au moins un moteur électrique (20), un convertisseur d'alimentation (28) alimenté depuis des moyens de captage de courant (18) et, monté en parallèle entre les moyens de captage de courant (18) et le convertisseur (28), un dispositif (40) de compensation actif des courants d'harmonique selon l'une quelconque des revendications précédentes.

## Patentansprüche

1. Aktive Kompensationsvorrichtung (40) für Oberschwingungsströme eines Hauptstroms für eine Parallelabzweigung an einem Eingangsschaltkreis eines Wandlers (28), Folgendes aufweisend:
- einen Speisestromsensor (44);
- einen Stromgenerator (46), der sich dazu eignet, einen Strom am Eingang des Wandlers (28) in Abhängigkeit von der durch den Stromsensor (44) an einer Energiezufuhrleitung gemessenen Stärke des Oberschwingungsstroms einzuspeisen,
wobei der Stromgenerator (46) dazu geeignet ist, am Eingang des Wandlers (28) einen Strom zu erzeugen und zusätzlich zum Oberschwingungsstrom einzuspeisen, der k mal höher ist als der durch den Stromsensor (44) gemessene Oberschwingungsstrom, wobei k positiv ist,
**dadurch gekennzeichnet, dass** der Stromgenerator (46) einen Linearverstärker der Klasse A umfasst, der einen Transistor (56), eine Quelle (62) zur kontinuierlichen Polarisation des Transistors und einen Vorverstärker (54) umfasst, der den Stromsensor (44) mit dem Transistor (56) verbindet, wobei der Vorverstärker eine Transferfunktion hat, die es ermöglicht, den durch den Stromsensor gemessenen Strom Iᵢₙ in eine Spannung gleich kRIᵢₙ umzuwandeln, die an die Basis des Transistors angelegt wird, wobei R der Wert eines Widerstands (58) ist, der den Transistor (56) mit Masse (27) verbindet, wobei der Transistor somit durch den Vorverstärker linear gesteuert wird.

2. Aktive Kompensationsvorrichtung (40) für Oberschwingungsströme eines Hauptstroms für eine Parallelabzweigung an einem Eingangsschaltkreis eines Wandlers (28), Folgendes aufweisend:
- einen Speisestromsensor (44);
- einen Stromgenerator (46), der sich dazu eignet, einen Strom am Eingang des Wandlers (28) in Abhängigkeit von der durch den Stromsensor (44) an einer Energiezufuhrleitung gemessenen Stärke des Oberschwingungsstroms einzuspeisen,
wobei der Stromgenerator (46) dazu geeignet ist, am Eingang des Wandlers (28) einen Strom zu erzeugen und zusätzlich zum Oberschwingungsstrom einzuspeisen, der k mal höher ist als der durch den Stromsensor (44) gemessene Oberschwingungsstrom, wobei k positiv ist,
**dadurch gekennzeichnet, dass** der Stromgenerator (46) einen Linearverstärker der Klasse B umfasst, der zwei Transistoren (76, 78), zwei Quellen (84, 86) zur kontinuierlichen Polarisation der zwei Transistoren und einen Vorverstärker (54) umfasst, der den Stromsensor (44) mit den Transistoren (76, 78) verbindet, wobei der Vorverstärker eine Transferfunktion hat, die es ermöglicht, den durch den Stromsensor gemessenen Strom Iᵢₙ in eine Spannung gleich kRIᵢₙ umzuwandeln, die an die Basis jedes Transistors angelegt wird, wobei R der Wert eines Widerstands (88) ist, der den Mittelpunkt, über den die zwei Transistoren verbunden sind, und die Energiezufuhrleitung verbindet, mit der der Widerstand über eine Spule (90) und einen Kondensators (92) verbunden ist, wobei die zwei Transistoren somit durch den Vorverstärker linear gesteuert werden.

3. Kompensationsvorrichtung nach Anspruch 1 oder Anspruch 2, **dadurch gekennzeichnet, dass** der Stromgenerator (46) dazu geeignet ist, am Eingang des Wandlers (28) einen zur Stärke des durch den Stromsensor (44) gemessenen Oberschwingungsstroms proportionalen Strom zu erzeugen und einzuspeisen.

4. Kompensationsvorrichtung nach einem der vorhergehenden Ansprüche, **dadurch gekennzeichnet, dass** der Stromsensor (44) dazu geeignet ist, nur die Wechselstromkomponenten des Stroms außer der Gleich- oder Wechselstromhauptkomponente entsprechend dem kontinuierlichen Anlegen zu messen.

5. Kompensationsvorrichtung nach einem der Ansprüche 1 bis 3, **dadurch gekennzeichnet, dass** der Stromsensor (44) dazu geeignet ist, von der Messung den Strom mit einer Frequenz auszuschließen, die gleich einer der Speisefrequenz entsprechenden vorbestimmten Frequenz ist.

6. Kompensationsvorrichtung nach Anspruch 5, **dadurch gekennzeichnet, dass** der Stromsensor (44) einen Sperrschaltkreis (152, 162) umfasst.

7. Kompensationsvorrichtung nach Anspruch 1, **dadurch gekennzeichnet, dass** der Verstärker von der Klasse A ist und darüber hinaus eine Entkopplungsspule (64) umfasst, die den Transistor (56) mit dem Polarisationsspannungsgenerator (62) verbindet.

8. Antriebsstrang eines Schienenzugfahrzeugs, das mindestens einen Elektromotor (20), einen Speisestromwandler (28), der aus den Stromsensoreinrichtungen (18) gespeist wird und, zwischen den Stromsensoreinrichtungen (18) und dem Wandler (28) parallelgeschaltet, eine aktive Kompensationsvorrichtung (40) für Oberschwingungsströme nach einem der vorhergehenden Ansprüche umfasst.

## Claims

1. Device (40) for active compensation of the harmonic currents of a main current for a branching in parallel on an input circuit of a converter (28), comprising:
- a supply current sensor (44);
- a current generator (46) suitable for injecting a current at the input of the converter (28) according to the intensity of the harmonic current measured by the current sensor (44) on a power supply line,
the current generator (46) being suitable for producing and injecting at the input of the converter (28), in addition to the harmonic current, a current k times greater than the harmonic current measured by the current sensor (44), where k is positive,
**characterised in that** the current generator (46) includes a linear class A amplifier comprising a transistor (56), a direct polarisation source (62) of said transistor, and a pre-amplifier (54) connecting the current sensor (44) to the transistor (56), the pre-amplifier having a transfer function allowing the conversion of the current Iᵢₙ measured by the current sensor, into a tension equal to kRIᵢₙ, applied on the base of the transistor, where R is the value of a resistance (58) connecting the transistor (58) to the ground (27, said transistor being then controlled linearly by the pre-amplifier.

2. Device (40) for active compensation of the harmonic currents of a main current for a branching in parallel on an input circuit of a converter (28), comprising:
- a supply current sensor (44);
- a current generator (46) suitable for injecting a current at the input of the converter (28) according to the intensity of the harmonic current measured by the current sensor (44) on a power supply line,
the current generator (46) being suitable for producing and injecting at the input of the converter (28), in addition to the harmonic current, a current k times greater than the harmonic current measured by the current sensor (44), where k is positive,
**characterised in that** the current generator (46) includes a linear class B amplifier, comprising two transistor (76, 78), two direct polarisation sources (84, 86) of said two transistors, and a pre-amplifier (54) connecting the current sensor (44) to said transistors (76, 78), the pre-amplifier having a transfer function allowing the conversion of the current Iᵢₙ measured by the current sensor, into a tension equal to kRIᵢₙ, applied on the bases of each transistor, where R is the value of a resistance (88) connecting the middle point by which the two transistors are connecting together, to the power supply line to which said resistance is connected through a oil (90) and a condensator (92), serially connected, said two transistors being then controlled linearly by the pre-amplifier.

3. Compensation device according to claim 1 or claim 2, **characterized in that** the current generator (46) is suitable for producing and injecting at the input of the converter (28) a current proportional to the intensity of the harmonic current measured by the current sensor (44).

4. Compensation device according to any one of the preceding claims, **characterized in that** the current sensor (44) is suitable for measuring only the alternating components of the current with the exception of the main component of direct or alternating current according to the application.

5. Compensation device according to any one of claims 1 to 3, **characterized in that** the current sensor (44) is suitable for excluding from the measurement the current having a frequency equal to a predetermined frequency corresponding to the supply frequency.

6. Compensation device according to claim 5, **characterized in that** the current sensor (44) includes a trap circuit (152, 162).

7. Compensation device according to claim 1, **characterized in that** the amplifier is a class A amplifier and further comprises a decoupling coil (64) connecting the transistor (56) to the polarisation voltage generator (62).

8. Traction system of a railway traction vehicle comprising at least one electric motor (20), a supply converter (28) fed from current pick-up means (18) and, mounted in parallel between the current pick-up means (18) and the converter (28), a device (40) for active compensation of the harmonic currents according to any one of the preceding claims.
